(19) **Europäisches Patentamt**

**European Patent Office**

**Office européen des brevets**

(11) **EP 1 629 666 B1**

(12) **EUROPÄISCHE PATENTSCHRIFT**

(45) Veröffentlichungstag und Bekanntmachung des Hinweises auf die Patenterteilung:
**22.11.2006 Patentblatt 2006/47**

(51) Int Cl.:
*H04N 5/21* (2006.01)          *G06T 5/00* (2006.01)
*H04N 1/52* (2006.01)

(21) Anmeldenummer: **05750295.7**

(22) Anmeldetag: **20.05.2005**

(86) Internationale Anmeldenummer:
**PCT/DE2005/000936**

(87) Internationale Veröffentlichungsnummer:
**WO 2005/114984 (01.12.2005 Gazette 2005/48)**

(54) **VERFAHREN ZUR REDUZIERUNG VON FARBMOIRÈ IN DIGITALEN BILDERN**

METHOD FOR REDUCING COLOR MOIRE IN DIGITAL IMAGES

PROCEDE DE REDUCTION DE L'EFFET DE MOIRE DES IMAGES NUMERIQUES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **24.05.2004 DE 102004025645**

(43) Veröffentlichungstag der Anmeldung:
**01.03.2006 Patentblatt 2006/09**

(73) Patentinhaber: **JENOPTIK Laser, Optik, Systeme GmbH**
**07745 Jena (DE)**

(72) Erfinder: **HAHN, Burkhard**
**07745 Jena (DE)**

(74) Vertreter: **Bertram, Helmut et al**
**Patentanwälte**
**OEHMKE & KOLLEGEN**
**Neugasse 13**
**07743 Jena (DE)**

(56) Entgegenhaltungen:
**EP-A- 1 022 912          EP-A- 1 083 737**
**EP-A- 1 202 220**

- **PATENT ABSTRACTS OF JAPAN Bd. 007, Nr. 136 (E-181), 14. Juni 1983 (1983-06-14) & JP 58 050881 A (HITACHI SEISAKUSHO KK), 25. März 1983 (1983-03-25)**

**Beschreibung**

Die Erfindung bezieht sich auf ein Verfahren zur Reduzierung von Farbmoire in digitalen Bildern.

Bei der Bildaufnahme mit digitalen Kameras werden hochfrequente Signale mit einer vom Pixelraster eines Bildsensors vorgegebenen festen Frequenz abgetastet. In großflächigen, feinstrukturierten Gebieten ergeben die Abtastpunkte oftmals niederfrequente Schwebungen, die zu einem störenden Farbmoires führen. Die Wellenlängen dieser Schwebungen können ein beträchtliches Vielfaches des Pixelabstandes betragen und sind stark von der Aufnahmesituation abhängig.

Zahlreiche bekannt gewordene technische Lösungen beziehen sich auf die Reduzierung der durch Unterabtastung hervorgerufenen Moiré-Effekte in digitalen Bildern. Darunter gibt es solche, die eine Übertragung von Moire verursachenden Strukturen auf den Bildsensor verhindern, wie etwa optische Filter, mit denen die Schärfe aus feinen Bildstrukturen vor deren Abbildung auf den Bildsensor herausgenommen wird, so dass die hochfrequenten Signale bei der Abtastung fehlen (DE 37 89 291 T2). Auch eine bewusst erzeugte Bewegungsunschärfe (JP 04 061 587 A) führt zu einem derartigen Ergebnis, doch gehen in beiden Fällen Bildinformationen verloren und die Bildschärfe verringert sich.

Eine andere Möglichkeit besteht darin, eine asymmetrische Farbverteilung im Pixelraster vorzusehen, indem sich die Farbverteilung auf der Pixelmatrix nicht mit konstanten Abständen wiederholt. Dadurch werden die Abtastbedingungen variiert und die Moireeffekte reduzieren sich (US 4 821 088).

Schließlich sind Techniken bekannt, die auf das bereits abgetastete Bild wirken, indem das digitale Bild zunächst in einen Luminanz-Chrominanz-Farbraum transformiert und anschließend eine Filterung der oberen Frequenzen der Chrominanz-Signale erfolgt. Nach der Filterung wird das Bild zurück in den ursprünglichen RGB-Farbraum überführt. Von Nachteil ist, dass nicht zwischen einem Farbmoiré und tatsächlichen Farbbildsignalen unterschieden wird. Je mehr die Signalintensität in den Kanälen zur Reduzierung des Farbmoire herabgesetzt wird, desto stärker treten Farbverfälschungen in den Kantenbereichen auf.

Auch der EP 1 083 737 A2 gelingt nicht die ausreichende Beseitigung dieser Farbverfälschungen, da durch die ausschließliche Verwendung der Farbtonwerte zur Lokalisierung der Gebiete, in denen Farbmoiré vorhanden ist, wichtige Signalcharakteristiken von Moire-Erscheinungen und bei der vorgesehenen Farbänderung für die lokalisierten Moiré-Pixel durch großflächig gemittelte Farbtonwerte die Moiré-Stärke selbst nicht berücksichtigt wird.

Aufgabe der Erfindung ist es deshalb, die Farbmoireunterdrückung dahingehend zu verbessern, dass Auswirkungen auf Kantenbereiche und feine Strukturen weiter reduziert werden, indem Farbmoiré verursachende niederfrequente Schwebungen derart detektiert und gedämpft werden, dass eine Korrektur nur für flächenhafte Bereiche vorgenommen wird und die Kantenbereiche sowie feine Strukturen weitgehend ausgeschlossen bleiben.

Gemäß der Erfindung wird die Aufgabe durch ein Verfahren zur Reduzierung von Farbmoiré in digitalen Bildern durch folgende Verfahrensschritte gelöst:

Transformation der Farbsignale des Bildes aus einem Ausgangsfarbraum in einen Luminanz-Kanal und in Chrominanz-Kanäle eines Luminanz-Chrominanz-Farbraumes, bei der der Luminanz-Kanal frei von Farbsignalen bleibt, die in die Chrominanz-Kanäle transformiert werden,
bildpunktweiser, auf erste ausgewählte Frequenzen beschränkter Energievergleich zwischen dem Luminanz-Kanal und den Chrominanz-Kanälen, um Farbmoiré behaftete Pixel zu ermitteln,
eine auf zweite ausgewählte Frequenzen beschränkte Korrektur der Energiewerte der Farbmoire behafteten Pixel in mindestens einem der Chrominanz-Kanäle und
Rücktransformation der korrigierten Farbsignale der Chrominanz-Kanäle und der Farbsignale des Luminanz-Kanals in den Ausgangsfarbraum.

Besonders zweckmäßige und vorteilhafte Ausgestaltungen und Weiterbildungen des erfindungsgemäßen Verfahrens ergeben sich aus den abhängigen Ansprüchen.

Deutliche Bildverbesserungen werden auch erreicht, wenn die erfindungsgemäßen Maßnahmen mehrfach auf das Bild angewendet werden, wobei schon eine 3 bis 5fache Anwendung ausreichend ist.

Die Erfindung nutzt die für Moire-Erscheinungen wichtige Frequenzcharakteristik der Farbsignale und den Vergleich von Bandpassenergien zwischen Luminanz-Kanal und Chrominanz-Kanälen als Markierungskriterium aus, um zunächst Farbmoiré behaftete Pixel zu bestimmen und danach in den Chrominanz-Kanälen eine frequenzselektive Energiereduzierung bei mittleren Frequenzen zur Unterdrückung des langwelligen Farbmoire vorzunehmen. Auf diese Weise gelingt nicht nur eine automatische Feststellung, an welchen Bildorten eine Signaldämpfung erforderlich ist, sondern auch, wie diese in Abhängigkeit von der Stärke des Auftretens des Moires ausgeführt werden muss. Dadurch hat die Dämpfung in der Nähe von Kanten weniger Farbverfälschungen zur Folge.

Nachstehend soll die Erfindung anhand der schematischen Zeichnung näher erläutert werden. Es zeigen:

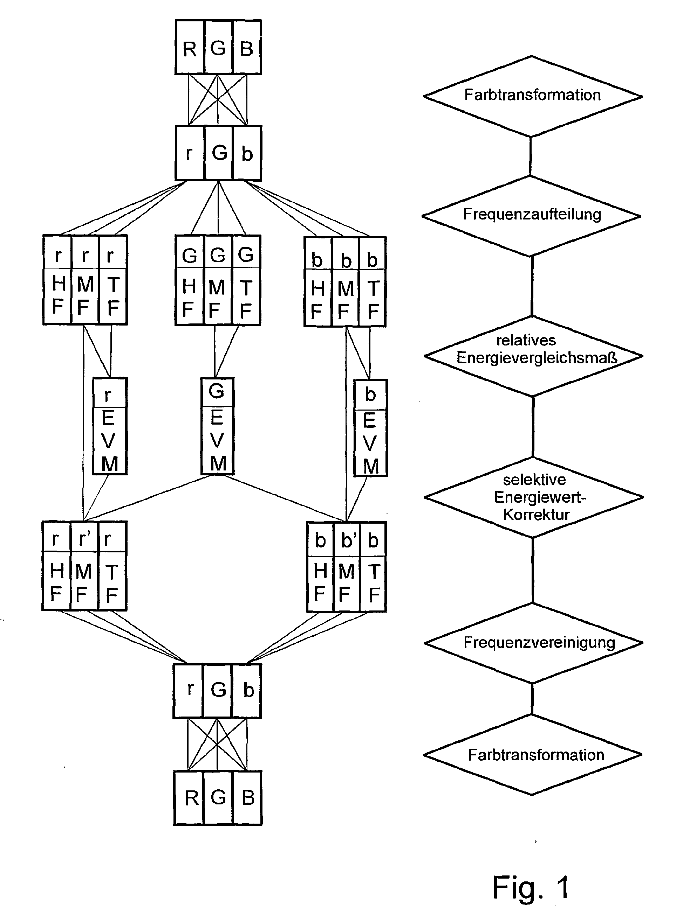

Fig. 1     den Ablauf des erfindungsgemäßen Verfahren

Fig. 2     die Frequenzaufteilung für den Luminanz-Kanal und die Chrominanz-Kanäle

Aus dem im vorliegenden Ausführungsbeispiel zur Darstellung für die Farbinformationen der Bildsignale eines digitalen Bildes dienenden RGB-Farbraum erfolgt zunächst eine Transformation in einen rGb-Luminanz-Chrominanz-Farbraum. Erfindungsgemäß bleibt der Luminanz-Kanal bei dieser Transformation frei von solchen Farbsignalen, die in die Chrominanz-Kanäle transformiert werden, d. h. von den Farbsignalen Rot R, Grün G und Blau B wird das grüne Farbsignal aus dem als Ausgangsfarbraum dienenden RGB-Farbraum unverändert in den Luminanz-Kanal überführt und die Chrominanz-Kanäle r und b werden durch

$$r = \frac{R}{R + G + B} \quad \text{und} \quad b = \frac{B}{R + G + B}$$

gebildet.

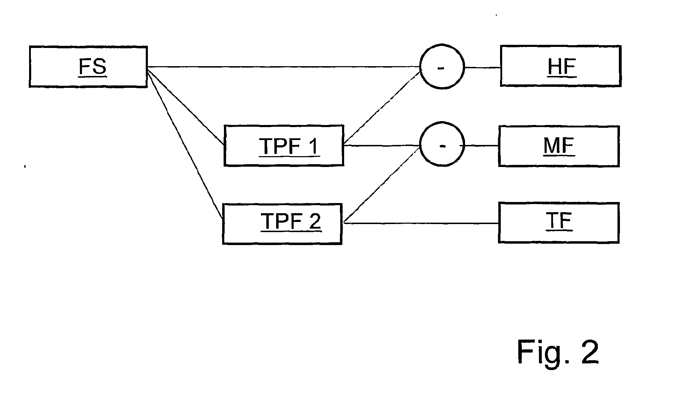

Zur Ermittlung Farbmoire behafteter Pixel wird zunächst in jedem der Kanäle eine Frequenzaufteilung der in den Luminanz- und Chrominanz-Kanälen vorhandenen Frequenzen z. B. entsprechend Fig. 2 vorgenommen, indem das breitbandige Frequenzsignal FS in jedem der Kanäle mittels zweier, z. B als gausssche Mittelungsfilter ausgebildete Tiefpassfilter TPF 1 und TPF 2 und Differenzbildung in drei Unterfrequenzbereiche geteilt wird, von denen ein erster Unterfrequenzbereich HF hohe, ein zweiter Unterfrequenzbereich MF mittlere und ein dritter Unterfrequenzbereich TF tiefe Frequenzen umfasst.

Anhand eines bildpunktweisen Energievergleiches zwischen den Chrominanz-Kanälen und dem Luminanz-Kanal, für den ein relatives Energievergleichsmaß EVM in Form einer Bandpassenergie aus dem Unterfrequenzbereich der mittleren und tiefen Frequenzen bildpunktweise für die Kanäle ermittelt wird, kann auf das Vorhandensein eines Farbmoire bei einen Pixel geschlossen werden. Das liegt darin begründet, dass ein in den Chrominanz-Kanälen vorhandenes Farbsignal, welches nicht im Luminanz-Kanal zu finden ist, ein als Falschsignal zu interpretierendes höheres relatives Energievergleichsmaß EVM in mindestens einem der Chrominanz-Kanäle liefert als im Luminanz-Kanal, währenddessen ein aus den selektierten Unterfrequenzbereichen MF und TF des Luminanz-Kanals ermitteltes höheres relatives Energievergleichsmaß EVM gegenüber einem niedrigeren Wert des relativen Energievergleichsmaßes EVM in den Chrominanz-Kanälen nicht auf ein Farbmoiré schließen lässt.

Zur Unterdrückung des Farbmoirés werden gemäß der Erfindung deshalb nur die Pixel korrigiert, für die der bildpunktweise Vergleich der relativen Energievergleichsmaße EVM zu einem höheren Wert in den selektierten Unterfrequenzbereichen mindestens eines Chrominanz-Kanals gegenüber den gleichartig selektierten Unterfrequenzbereichen des Luminanz-Kanals führt.

Ein relatives Energievergleichsmaß EVM gemäß dem vorliegenden Ausführungsbeispiel kann dadurch gebildet sein, dass die Energie des mittelfrequenten zweiten Unterfrequenzbereiches ins Verhältnis gesetzt wird zur Summe der Energien des mittelfrequenten zweiten und des tieffrequenten dritten Unterfrequenzbereiches.

Zur Korrektur der Energiewerte stehen unterschiedliche Möglichkeiten einer Energiedämpfung zur Verfügung, jedoch sind nur diejenigen zum Erreichen des gewünschten Effektes brauchbar, die gemäß der Erfindung zu einer selektiven Dämpfung des Signals führen und nicht den gesamten Inhalt des chrominanten Kanals beseitigen.

Deshalb beschränkt sich die zur Reduzierung des Energiewertes cMF_Wert vorgesehene Dämpfung bevorzugt auf den mittelfrequenten Unterfrequenzbereich MF in mindestens einem der Chrominanz-Kanäle, wobei ein zwischen null und eins variierbarer Dämpfungsfaktor $\alpha$ das Ergebnis der Farbmoireunterdrückung unterschiedlich beeinflussen kann. Liegt z. B. für den Luminanz-Kanal ein größeres Energievergleichsmaß EVM vor als im Chrominanz-Kanal, wird der Dämpfungsfaktor $\alpha = 1$ sein. Ansonsten kann der Dämpfungsfaktor $\alpha$ aber auch eine vorgegebene, unter Umständen experimentell ermittelte Konstante sein. Allgemein gilt:

$$cMF\_Wert\_neu = \alpha * cMF\_Wert$$

Vorteilhaft sollte der Dämpfungsfaktor $\alpha$ jedoch eine (mathematische) Abhängigkeit von dem Energievergleichsmaß EVM aufweisen. Das hat zur Folge, dass die Farbmoireunterdrückung wesentlich selektiver gestaltet werden kann, was sich im Besonderen positiv auf die im Bild vorhandenen Kantenbereiche auswirkt. Da aus dem erfindungsgemäßen Auswahlverfahren der Farbmoiré behafteten Pixel mittels der Energievergleichsmaße EVM Zugehörigkeitswahrscheinlichkeiten resultieren, erfolgt bei einer Abhängigkeit des Dämpfungsfaktor $\alpha$ von dem Energievergleichsmaß EVM eine selektive Dämpfung entsprechend dieser Wahrscheinlichkeiten.

Handelt es sich bei dem Dämpfungsfaktor $\alpha$ um das Energievergleichsmaß EVM des Luminanz-Kanals, werden besonders gute Korrekturergebnisse erzielt.

Es sind selbstverständlich auch andere Abhängigkeiten möglich. So kann der Dämpfungsfaktor $\alpha$ auch das Produkt aus dem Energievergleichsmaß EVM des Luminanz-Kanals und dem tieffrequenten Energiewert eines Chrominanz-Kanals sein.

Es ist für den Fachmann ersichtlich, dass das erfindungsgemäße Verfahren sowohl in einer programmtechnischen Lösung implementiert oder aber auch als Hardware-Lösung ausgeführt sein kann.

Nachdem die Energiewertkorrektur abgeschlossen ist, werden die Unterfrequenzbereiche wieder zu einem Gesamtfrequenzbereich zusammengefügt und es erfolgt eine Rücktransformation der korrigierten Farbsignale der Chrominanz-Kanäle und der Farbsignale des Luminanz-Kanals in den Ausgangsfarbraum.

**Patentansprüche**

1. Verfahren zur Reduzierung von Farbmoiré in digitalen Bildern durch

   - Transformation der Farbsignale des Bildes aus einem Ausgangsfarbraum in einen Luminanz-Kanal und in Chrominanz-Kanäle eines Luminanz-Chrominanz-Farbraumes, bei der der Luminanz-Kanal frei von Farbsignalen bleibt, die in die Chrominanz-Kanäle transformiert werden,
   - bildpunktweisen, auf erste ausgewählte Frequenzen beschränkten Energievergleich zwischen dem Luminanz-Kanal und den Chrominanz-Kanälen, um Farbmoiré behaftete Pixel zu ermitteln,
   - eine auf zweite ausgewählte Frequenzen beschränkte Korrektur der Energiewerte der Farbmoire behafteten Pixel in mindestens einem der Chrominanz-Kanäle und
   - Rücktransformation der korrigierten Farbsignale der Chrominanz-Kanäle und der Farbsignale des Luminanz-Kanals in den Ausgangsfarbraum.

2. Verfahren nach Anspruch 1, bei dem als Ausgangsfarbraum der RGB-Farbraum mit R für rotes, G für grünes und B für blaues Farbsignal dient, aus dem die Transformation in den Luminanz-Chrominanz-Farbraum **dadurch** erfolgt, dass das grüne Farbsignal unverändert in den Luminanz-Kanal überführt und die Chrominanz-Kanäle r und b gebildet werden durch

$$r = \frac{R}{R + G + B} \quad \text{und} \quad b = \frac{B}{R + G + B} \; .$$

3. Verfahren nach Anspruch 2, bei dem in jedem der Kanäle eine Frequenzaufteilung der in dem Luminanz-Kanal und in den Chrominanz-Kanälen vorhandenen Frequenzen in Unterfrequenzbereiche vorgenommen wird, von denen ein erster Unterfrequenzbereich hohe, ein zweiter Unterfrequenzbereich mittlere und ein dritter Unterfrequenzbereich tiefe Frequenzen umfasst.

4. Verfahren nach Anspruch 3, bei dem zum bildpunktweisen Energievergleich ein relatives Energievergleichsmaß dient, welches aus dem Verhältnis der Energie des mittelfrequenten zweiten Unterfrequenzbereiches zur Summe der Energien des mittelfrequenten zweiten und des tieffrequenten dritten Unterfrequenzbereiches ermittelt ist.

5. Verfahren nach Anspruch 4, bei dem die Korrektur der Energiewerte der Farbmoire behafteten Pixel als Energiewertreduzierung auf den mittelfrequenten zweiten Unterfrequenzbereich in mindestens einem Chrominanz-Kanal beschränkt ist.

6. Verfahren nach Anspruch 5, bei dem zur Energiewertreduzierung ein mit dem Energievergleichsmaß verknüpfter Dämpfungsfaktor $\alpha$ dient.

7. Verfahren nach Anspruch 6, bei dem der Dämpfungsfaktor $\alpha$ dem Energievergleichsmaß des Luminanz-Kanals entspricht.

8. Verfahren nach Anspruch 5, bei dem zur Energiewertreduzierung als Dämpfungsfaktor $\alpha$ eine experimentell ermittelte Konstante dient.

**9.** Verfahren nach Anspruch 6, bei dem der Dämpfungsfaktor $\alpha$ dem Produkt aus dem Energievergleichsmaß des Luminanz-Kanals und dem tieffrequenten Energiewert eines Chrominanz-Kanals entspricht.

**10.** Verfahren zur Reduzierung von Farbmoire in digitalen Bildern, bei dem eine Mehrfachanwendung der Verfahren mindestens einer der Ansprüche 1 bis 9 erfolgt.


**Claims**

**1.** A method of reducing colour moiré in digital images by

- transformation of the colour signals of the image from an initial colour space into a luminance channel and into chrominance channels of a luminance/chrominance colour space, wherein the luminance channel remains free from colour signals that are being transformed into the chrominance channels;
- an energy comparison between the luminance channel and the chrominance channels, said comparison being effected image point by image point and being limited to first selected frequencies, in order to determine pixels affected by colour moiré;
- a correction of the energy values of the pixels affected by colour moiré in at least one of the chrominance channels, said correction being limited to second selected frequencies, and
- retransformation of the corrected colour signals from the chrominance channels and of the colour signals from the luminance channel into the initial colour space.

**2.** The method according to claim 1, wherein the initial colour space is the RGB colour space with R for red, G for green and B for blue colour signals, from which colour space the transformation into the luminance/chrominance colour space is effected by passing the green colour signal to the luminance channel without modifying said signal, and the chrominance channels r and b are formed as follows:

$$r = \frac{R}{R+G+B} \quad \text{and} \quad b = \frac{B}{R+G+B} \; .$$

**3.** The method according to claim 2, wherein in each of the channels a frequency division into sub-frequency ranges of the frequencies contained in the luminance channel and in the chrominance channels is effected, among which a first sub-frequency range comprises high frequencies, a second sub-frequency range comprises middle frequencies, and a third sub-frequency range comprises low frequencies.

**4.** The method according to claim 3, wherein a comparative measure of relative energy serves to compare the energy from one image point to another, said measure being determined from the ratio of the energy of the second sub-frequency range comprising middle frequencies to the sum of the energies of the second sub-frequency range comprising middle frequencies and the third sub-frequency range comprising low frequencies.

**5.** The method according to claim 4, wherein the correction of the energy values of the pixels affected by colour moiré serving to reduce the energy value is limited to the second sub-frequency range, comprising middle frequencies, in at least one chrominance channel.

**6.** The method according to claim 5, wherein an attenuation factor $\alpha$ associated with the comparative measure of energy serves to reduce the energy value.

**7.** The method according to claim 6, wherein the attenuation factor $\alpha$ corresponds to the comparative measure of energy of the luminance channel.

**8.** The method according to claim 5, wherein an experimentally determined constant serves as the attenuation factor $\alpha$ in reducing the energy value.

**9.** The method according to claim 6, wherein the attenuation factor $\alpha$ corresponds to the product of the comparative measure of energy of the luminance channel and the low-frequency energy value of a chrominance channel.

10. A method of reducing colour moire in digital images, wherein a multiple application of the method according to at least one of claims 1 to 9 is effected.

**Revendications**

1. Procédé destiné à réduire le moiré de couleur dans des images numériques par

   - transformation des signaux de couleur de l'image à partir d'un espace colorimétrique initial en un canal de luminance et en des canaux de chrominance d'un espace colorimétrique de luminance/de chrominance, transformation lors de laquelle le canal de luminance reste libre de signaux de couleur qui seront transformés en canaux de chrominance;
   - une comparaison d'énergie entre le canal de luminance et les canaux de chrominance, cette comparaison étant effectuée d'un point d'image à l'autre et étant limitée à des premières fréquences sélectionnées, afin de déterminer les pixels qui sont affectés du moiré de couleur;
   - une correction des valeurs énergétiques des pixels affectés du moiré de couleur dans au moins l'un des canaux de chrominance, cette correction étant limitée à des deuxièmes fréquences sélectionnées, et
   - une rétrotransformation des signaux de couleur corrigés des canaux de chrominance et des signaux de couleur du canal de luminance en l'espace colorimétrique initial.

2. Procédé selon la revendication 1, dans lequel l'espace colorimétrique initial est l'espace colorimétrique RVB dans lequel R est le signal de couleur rouge, V est le signal de couleur vert et B est le signal de couleur bleu, espace colorimétrique à partir duquel la transformation en l'espace colorimétrique de luminance/de chrominance est effectuée en passant le signal de couleur vert dans le canal de luminance sans modifier ledit signal, et les canaux de chrominance r et b sont formés selon:

$$r = \frac{R}{R+V+B} \quad \text{and} \quad b = \frac{B}{R+V+B}.$$

3. Procédé selon la revendication 2, dans lequel on effectue dans chacun des canaux une répartition de fréquence des fréquences contenues dans le canal de luminance et dans les canaux de chrominance en plages de sous-fréquences, dont une première plage de sous-fréquences comprend des fréquences hautes, une deuxième plage de sous-fréquences comprend des fréquences médianes, et une troisième plage de sous-fréquences comprend des fréquences basses.

4. Procédé selon la revendication 3, dans lequel une mesure comparative d'énergie relative sert à comparaître l'énergie d'un point d'image à l'autre, ladite mesure étant déterminée à partir du rapport de l'énergie de la deuxième plage de sous-fréquences à fréquence médiane à la somme des énergies de la deuxième plage de sous-fréquences à fréquence médiane et de la troisième plage de sous-fréquences à fréquence basse.

5. Procédé selon la revendication 4, dans lequel la correction des valeurs énergétiques des pixels affectés du moiré de couleur en telle que réduction du valeur énergétique est limitée à la deuxième plage de sous-fréquences à fréquence médiane dans au moins un canal de chrominance.

6. Procédé selon la revendication 5, dans lequel un facteur d'atténuation α associé à la mesure comparative d'énergie sert à réduire la valeur énergétique.

7. Procédé selon la revendication 6, dans lequel le facteur d'attenuation α correspond à la mesure comparative d'énergie du canal de luminance.

8. Procédé selon la revendication 5, dans lequel une constante déterminée par experimentation sert de facteur d'attenuation α pour la réduction de la valeur énergétique.

**9.** Procédé selon la revendication 6, dans lequel le facteur d'attenuation $\alpha$ correspond au produit de la mesure comparative d'énergie du canal de luminance et de la valeur énergétique à fréquence basse d'un canal de chrominance.

**10.** Procédé destiné à réduire le moiré de couleur dans des images numériques, dans lequel on effectue une application multiple du procédé selon au moins l'une des revendications 1 à 9.

Fig. 1

8

EP 1 629 666 B1

Fig. 2

9